# EUROPÄISCHE PATENTSCHRIFT

(11) **EP 3 592 679 B1**
(45) Veröffentlichungstag und Bekanntmachung des Hinweises auf die Patenterteilung: **20.09.2023**
(21) Anmeldenummer: 18717231.7
(22) Anmeldetag: 08.03.2018
(51) Int. Cl.: B65G 69/18, B65B 39/00

(54) **UMFÜLLVORRICHTUNG**
TRANSFER DEVICE
DISPOSITIF DE TRANSVASEMENT

(30) Priorität: 09.03.2017 DE 102017104975
(43) Veröffentlichungstag der Anmeldung: 15.01.2020
(73) Patentinhaber: Schneider, Thomas, 4434 Hoelstein (CH)
(72) Erfinder: Schneider, Thomas, 4434 Hoelstein (CH)
(74) Vertreter: Wolf, Michael
(86) Internationale Anmeldenummer: PCT/EP2018/055803
(87) Internationale Veröffentlichungsnummer: WO 2018/162656

(56) Entgegenhaltungen:
- EP-A1- 0 685 415
- EP-A1- 0 754 636
- DE-A1- 10 031 615
- DE-A1-102009 025 290

## Beschreibung

Die Erfindung betrifft eine Umfüllvorrichtung gemäß dem Oberbegriff des Patentanspruchs 1.

Eine Umfüllvorrichtung der eingangs genannten Art ist aus dem Patentdokument DE 10 2009 025 290 A1 bekannt. Diese Umfüllvorrichtung besteht aus einem ersten Anschlussbereich für einen ersten Behälter und einem zweiten Anschlussbereich für einen zweiten Behälter, die jedenfalls während einer Umfüllphase eines Mediums von einem in den anderen Behälter miteinander verbunden und einander gegenüberliegend ausgebildet sind, wobei der erste Anschlussbereich an einem ersten Gehäuseteil und der zweite Anschlussbereich an einem zweiten Gehäuseteil angeordnet und die beiden Gehäuseteile beweglich zueinander ausgebildet sind. An jedem Anschlussbereich ist bei dieser Lösung jeweils eine verdrehbare Klappe vorgesehen, die bei miteinander verbundenen Anschlussbereichen in der ersten Stellung geschlossen und in der zweiten Stellung geöffnet ist. Die Aufgabe einer solchen Umfüllvorrichtung besteht, wie oben bereits angedeutet, dabei darin, den Inhalt bzw. das genannte Medium, typischer Weise ein sogenannter Gefahrstoff, aus dem einen Behälter in den anderen Behälter umzufüllen, und zwar ohne dass dabei die Umwelt der Umfüllvorrichtung mit dem Gefahrstoff in Berührung kommt. Nachteilig an dieser Klappenlösung ist, dass sich nicht vermeiden lässt, dass die Klappen und insbesondere deren Dichtungen mit dem Gefahrstoff in Berührung kommen, was zu deren Beschädigung (zum Beispiel durch Ablagerung) führen kann. Das Patentdokument EP0754636A1 offenbart eine Umfüllvorrichtung nach dem Oberbegriff des Anspruchs 1.

Der Erfindung liegt die Aufgabe zugrunde, eine Umfüllvorrichtung der eingangs genannten Art zu verbessern. Insbesondere soll eine Umfüllvorrichtung geschaffen werden, bei der der Übergangsbereich vom einen Behälter zum anderen Behälter in der zweiten Stellung klappenfrei ausgebildet ist.

Diese Aufgabe ist mit einer Umfüllvorrichtung der eingangs genannten Art durch die im Kennzeichen des Patentanspruchs 1 aufgeführten Merkmale gelöst.

Nach der Erfindung ist also vorgesehen, dass der erste Gehäuseteil und der zweite Gehäuseteil gemeinsam ein auch vor und nach der Umfüllphase nach außen abgedichtetes Umfüllgehäuse bilden.

Mit anderen Worten zeichnet sich die erfindungsgemäße Lösung somit dadurch aus, dass statt wie bisher beim vorgenannten Stand der Technik lediglich eine mit Klappen versehene Kupplungsvorrichtung zum Verbinden der beiden Anschlussbereiche ein über die beiden Gehäuseteile eine Bewegung der beiden Anschlussbereiche ermöglichendes Umfüllgehäuse geschaffen wird, das in jeder Stellung vorzugsweise durch entsprechende Dichtungen von der Umwelt abgeschottet ist.

Unter einem Anschlussbereich ist dabei, wie bisher auch schon, letztlich ein zum jeweiligen Behälter passender Flansch oder dergleichen zu verstehen, an dem der Behälter nach außen abgedichtet befestigt werden kann.

Besonders bevorzugt ist, was weiter unten noch genauer erläutert wird, am Umfüllgehäuse eine Betätigungseinrichtung zum Öffnen eines der beiden Behälter vor dem Umfüllen und zum Verschließen desselben nach dem Umfüllen angeordnet. Hierzu ist der Behälter, insbesondere der zweite Behälter, mit einem Deckel, Stopfen, Zapfen oder dergleichen versehen, der mit der Betätigungseinrichtung entfernt werden kann, und zwar so, dass dieser durch den zweiten Anschlussbereich gezogen wird, aber innerhalb eines nach außen abgedichteten Innenraums des Umfüllgehäuses bleibt.

Andere vorteilhafte Weiterbildungen der erfindungsgemäßen Umfüllvorrichtung ergeben sich aus den abhängigen Patentansprüchen. Hierzu gehören insbesondere, worauf nachfolgend noch genauer eingegangen wird, dass der Gefahrstoff bei der erfindungsgemäßen Lösung nicht mehr über empfindliche Dichtungen fließen muss, dass der Öffnungsquerschnitt zwischen den beiden Behältern nicht mehr durch eine Klappe verkleinert wird und dass beide Behälter zur Einleitung eines Umfüllvorganges in annähernd aufrechter Position mit der Umfüllvorrichtung verbunden werden können.

Der Vollständigkeit halber wird noch auf die weiter abliegenden Dokumente DE 10 2008 018 820 A1 und DE 195 27 408 C1 hingewiesen.

Die erfindungsgemäße Umfüllvorrichtung einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert.

Es zeigt
- Figur 1: im Schnitt die erfindungsgemäße Umfüllvorrichtung mit den beiden Behältern (schematisch) und die Ge-häuseteile in einer ersten Stellung, wobei der eine Behälter mit einem Deckel verschlossen ist und die Betätigungseinrichtung noch nicht mit dem Deckel verkoppelt ist;
- Figur 2: im Schnitt die Umfüllvorrichtung gemäß Figur 1 (allerdings ohne die Behälter), wobei die Betätigungseinrichtung mit dem Deckel verkoppelt, der Behälter aber noch verschlossen ist;
- Figur 3: in Vorderansicht die Umfüllvorrichtung gemäß Figur 2;
- Figur 4: im Schnitt die Umfüllvorrichtung gemäß Figur 2 allerdings bei geöffnetem Deckel;
- Figur 5: in Vorderansicht die Umfüllvorrichtung gemäß Figur 4;
- Figur 6: im Schnitt die Umfüllvorrichtung gemäß Figur 2, allerdings mit den Gehäuseteilen in einer zweiten Stellung und mit den dargestellten Reinigungsdüsen;
- Figur 7: in Vorderansicht die Umfüllvorrichtung gemäß Figur 6;
- Figur 8: im Schnitt die Betätigungseinrichtung ohne das Umfüllgehäuse, aber mit aufgenommenem Deckel;
- Figur 9: perspektivisch den Deckel des zweiten Behälters;
- Figur 10: im Schnitt den Deckel gemäß Figur 9;
- Figur 11: perspektivisch das (demontierte) Betätigungselement der Betätigungseinrichtung; und
- Figur 12: perspektivisch den zweiten Behälter mit der Spanneinrichtung und einer Schelle.

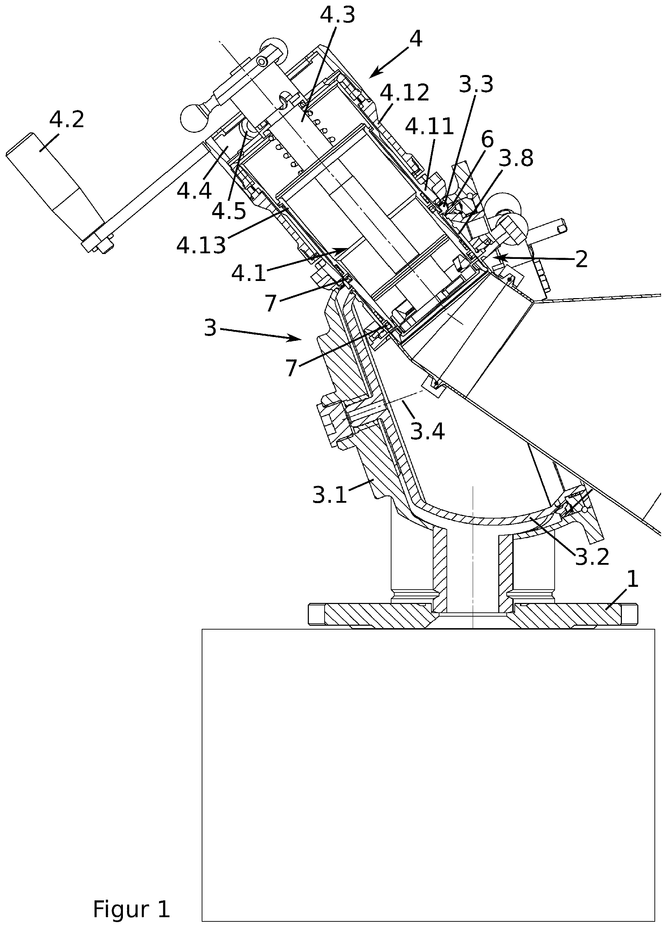

Die in den Figuren 1 bis 7 dargestellte Umfüllvorrichtung besteht aus einem ersten Anschlussbereich 1 für einen ersten Behälter und einem zweiten Anschlussbereich 2 für einen zweiten Behälter, die während einer Umfüllphase eines Mediums von einem in den anderen Behälter - aber auch außerhalb der Umfüllphase (und insoweit unterscheidet sich die erfindungsgemäße Lösung vom eingangs zitierten Stand der Technik wesentlich) - miteinander verbunden und einander gegenüberliegend ausgebildet sind, wobei der erste Anschlussbereich 1 an einem ersten Gehäuseteil 3.1 und der zweite Anschlussbereich 2 an einem zweiten Gehäuseteil 3.2 angeordnet und die beiden Gehäuseteile 3.1, 3.2 beweglich zueinander ausgebildet sind.

Wesentlich für die erfindungsgemäße Umfüllvorrichtung ist nun, und dies gilt für alle möglichen Ausführungsformen, dass der erste Gehäuseteil 3.1 und der zweite Gehäuseteil 3.2 gemeinsam ein auch vor und nach der Umfüllphase nach außen abgedichtetes Umfüllgehäuse 3 bilden.

Besonders bevorzugt ist dabei vorgesehen, dass der erste Anschlussbereich 1 auf einer zum zweiten Gehäuseteil 3.2 abgewandten Seite des ersten Gehäuseteils 3.1 und der zweite Anschlussbereich 2 auf einer zum ersten Gehäuseteil 3.1 abgewandten Seite des zweiten Gehäuseteils 3.2 angeordnet ist. Unter "abgewandt" ist dabei im ersten Fall konkret zu verstehen, dass das erste Gehäuseteil 3.1 zwischen dem ersten Anschlussbereich 1 und dem zweiten Gehäuseteil 3.2 angeordnet ist. Im zweiten Fall bedeutet "abgewandt" entsprechend, dass das zweite Gehäuseteil 3.2 zwischen dem zweiten Anschlussbereich 2 und dem ersten Gehäuseteil 3.1 angeordnet ist.

Zunächst etwas allgemeiner betrachtet, ist weiterhin besonders bevorzugt vorgesehen, dass die Gehäuseteile 3.1, 3.2 schalenförmig ausgebildet sind. Unter einer Schale ist dabei im Sinne der Technischen Mechanik ein flächiges Tragwerk zu verstehen, das einfach oder doppelt (räumlich) gekrümmt ausgebildet ist (siehe hierzu auch https://de.wikipedia.org/w/index.php?title= Schale_(Technische_Mechanik)&oldid=156565661). Dabei ist weiterhin besonders bevorzugt vorgesehen, dass der eine Gehäuseteil 3.1 den anderen Gehäuseteil 3.2 mindestens teilweise umschließend ausgebildet ist.

Besonders bevorzugt ist in diesem Kontext schließlich, wie in den Figuren dargestellt, vorgesehen, dass die Gehäuseteile 3.1, 3.2 topfartig ausgebildet sind. Mit anderen Worten ausgedrückt, ist das Umfüllgehäuse 3 somit im Grunde wie zwei ineinander gestellte Töpfe ausgebildet, wobei weiterhin bevorzugt vorgesehen ist, dass die Gehäuseteile 3.1, 3.2 an ihrem topfartigen Rand (Topföffnung) zueinander abgedichtet ausgebildet sind. Auf diese und weitere Abdichtungen wird weiter unten noch genauer eingegangen.

Darüber hinaus ist, wie in den Figuren dargestellt, vorgesehen, dass eine bzw. die Ebene der Topföffnungen der beiden Gehäuseteile 3.1, 3.2 nicht vertikal verlaufend ausgebildet ist. Genauer betrachtet, beträgt der Winkel der Ebene der Topföffnungen zur Horizontalen etwa zwischen 60° und 80°.

Weiterhin ist vorgesehen, dass die Gehäuseteile 3.1, 3.2 verdrehbar zueinander ausgebildet sind. Hierzu sind sie, wie aus den Figuren ersichtlich, besonders bevorzugt, über eine vorzugsweise nicht waagerecht verlaufende Drehachse 3.4 miteinander verbunden ausgebildet. Weiterhin ist dabei vorgesehen, dass die Drehachse 3.4 der beiden Gehäuseteile 3.1, 3.2 senkrecht zur Ebene der Topföffnungen der beiden Gehäuseteile 3.1, 3.2 verlaufend ausgebildet ist.

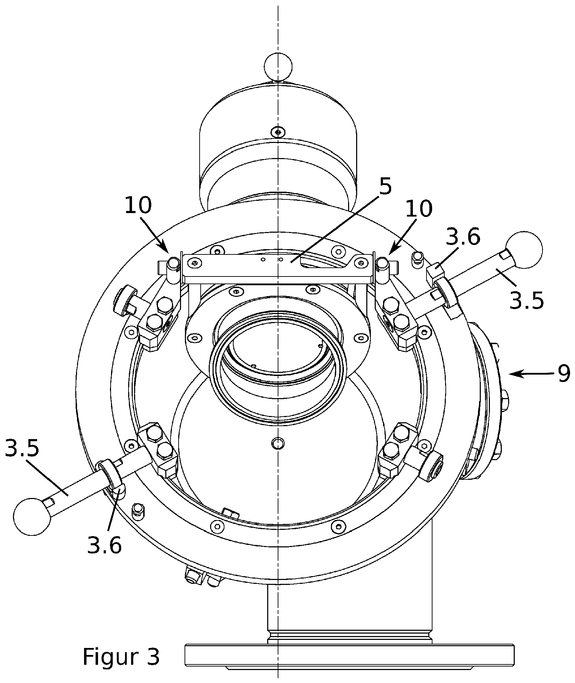

Um die Gehäuseteile 3.1, 3.2 auf einfache Weise verstellen zu können, ist bevorzugt vorgesehen, dass am zweiten Gehäuseteil 3.2, der bei dem dargestellten Ausführungsbeispiel im ersten Gehäuseteil 3.1 angeordnet ist, zu dessen Verstellung ein oder mehrere Handgriff(e) 3.5 angeordnet ist/sind. Dabei ist weiterhin bevorzugt vorgesehen, dass am Umfüllgehäuse 3 Anschläge 3.6 zur Bewegungsbegrenzung des zweiten Gehäuseteils 3.2 angeordnet sind (siehe hierzu Figur 3).

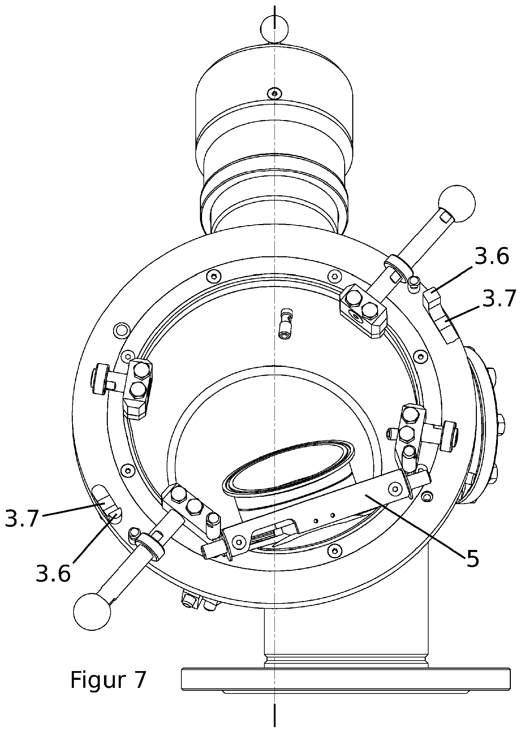

Weiterhin ist besonders bevorzugt vorgesehen, dass die beiden Gehäuseteile 3.1, 3.2 in Richtung der Drehachse 3.4 in gewissem Maße zueinander verstellbar ausgebildet sind, d.h. die Ebenen der Topföffnungen sind orthogonal zueinander verschieblich. Auf diese Weise ist es möglich, die oben genannte Dichtung 6 (insbesondere Ringdichtung) zwischen den Topföffnungen der beiden Gehäuseteile 3.1, 3.2 mehr oder weniger stark zusammen zu pressen. Hierzu sind (siehe Figur 7) an den Anschlägen 3.6 flache Rampen 3.7 für entsprechende Rollenlager an den Handgriffen 3.5 vorgesehen, die bewirken, dass die Dichtung 6 beim Drehen des Gehäuseteils 3.2 weniger stark gepresst wird, als wenn sich der zweite Behälter in der oberen Position befindet, d.h. es ist einerseits dafür gesorgt, dass die Ränder zwar stets dicht miteinander verbunden sind, sich aber gleichzeitig in bestimmten Phasen (also insbesondere beim Drehen des Gehäuseteils 3.2, mithin beim Umfüllen) vergleichsweise leicht zueinander verstellen lassen.

Wie aus den Figuren 1 bis 7 ersichtlich, ist weiterhin bevorzugt vorgesehen, dass der erste Anschlussbereich 1 an einem unteren Bereich des Umfüllgehäuses 3 angeordnet und der zweite Anschlussbereich 2 zwischen einer oberen und einer unteren Stellung verstellbar ausgebildet ist.

Dabei ist weiterhin bevorzugt vorgesehen, dass wahlweise eine Anschlussebene des ersten Anschlussbereichs 1 waagerecht und/oder eine Anschlussebene des zweiten Anschlussbereichs 2 sowohl in seiner oberen als auch in seiner unteren Stellung nicht waagerecht verlaufend ausgebildet ist.

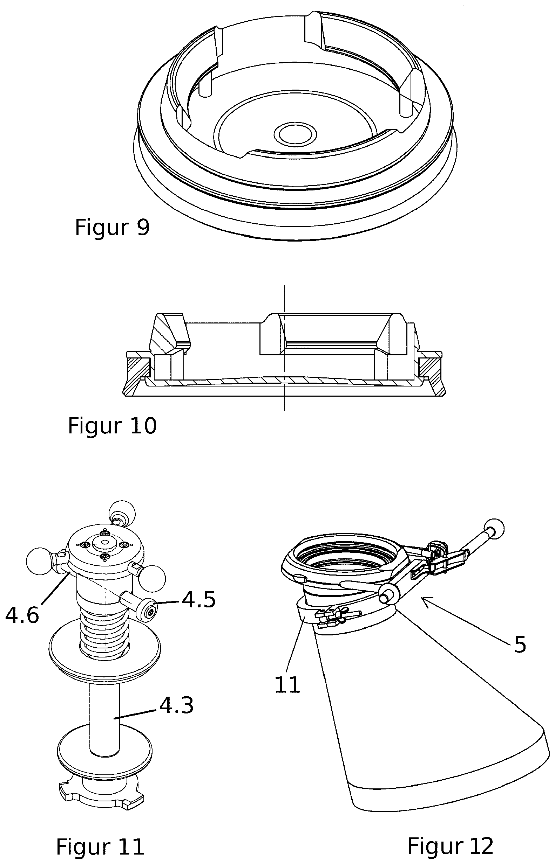

Wie aus Figur 1 ersichtlich, ist ferner bevorzugt vorgesehen, dass der Anschlussbereich 1 zum Verbleib fest mit dem ersten Behälter verschraubbar und der zweite Anschlussbereich 2 für einen Umfüllvorgang mit Hilfe einer werkzeugfrei lösbaren Spanneinrichtung 5 (siehe hierzu insbesondere auch Figur 12 bzw. die DE 10 2016 101 646 A1) mit dem zweiten Behälter verbindbar ausgebildet ist, wobei die Spanneinrichtung 5 selbst am zweiten Behälter befestigt ist und vorzugsweise stets an diesem verbleibt, und zwar mit Hilfe der ausschließlich in Figur 12 dargestellten Schelle 11 (bevorzugt sogenannte Tri-Clamp-Klammer).

Ganz besonders bevorzugt ist weiterhin vorgesehen, dass am Umfüllgehäuse 3 eine Betätigungseinrichtung 4 zum Öffnen und Verschließen eines der beiden Behälter, hier der zweite Behälter am Anschlussbereich 2, angeordnet ist. Diese Betätigungseinrichtung 4 ist dabei einerseits auf einer zum zweiten Gehäuseteil 3.2 abgewandten Seite des ersten Gehäuseteils 3.1 angeordnet und andererseits beim Öffnen und Schließen eines der beiden Behälter (hier des zweiten Behälters) durch eine am zweiten Gehäuseteil 3.2 vorgesehene Öffnung 3.3 hindurchgreifend ausgebildet. Unter "abgewandt" ist dabei zu verstehen, dass das erste Gehäuseteil 3.1 praktisch zwischen der Betätigungseinrichtung 4 und dem zweiten Gehäuseteil 3.2 angeordnet ist.

Ferner ist bevorzugt vorgesehen, dass die Betätigungseinrichtung 4 in ihrem Innern einen nach außen abgedichteten Aufnahmebereich 4.1 für einen Deckel eines der beiden Behälter aufweist (hier konkret für den Deckel des zweiten Behälters).

Wie der Vergleich der Figuren offenbart, ist weiterhin bevorzugt vorgesehen, dass die Betätigungseinrichtung 4 zwischen einer ersten Stellung, bei der ein Deckel eines der beiden Behälters an diesem Behälter, hier konkret wieder der Behälter am Anschlussbereich 2, positioniert ist, und einer zweiten Stellung, bei der der Deckel auf einer dem zweiten Anschlussbereich 2 abgewandten Seite des zweiten Gehäuseteils 3.2 positioniert ist, vorzugsweise teleskopartig verstellbar ausgebildet ist. Damit dabei das Medium (auch Gefahrstoff genannt) aber insbesondere auch ein im ersten Behälter befindliches Prozeßgas beim Verstellen, aber auch nach dem Lösen des zweiten Behälters vom zweiten Anschlussbereich 2, nicht austreten kann, weist die Betätigungseinrichtung 4 hierzu mindestens ein Abdichtungselement 7 auf, hier (vergleiche die Figuren) insbesondere zwei O-Ringe.

Schließlich ist noch bevorzugt vorgesehen, dass die Betätigungseinrichtung 4 durch eine Drehbewegung betätigbar ausgebildet ist. Hierzu ist sie vorzugsweise mit einer Handkurbel 4.2 versehen.

Die erfindungsgemäße Umfüllvorrichtung funktioniert - zunächst einmal im Grunde unabhängig von der konkreten Gestaltung der Betätigungseinrichtung 4 betrachtet - wie folgt:
Ausgangspunkt dieser Beschreibung ist Figur 1. Dort sind beide Behälter mit der Umfüllvorrichtung verbunden, wobei der erste Anschlussbereich 1 am ersten Behälter befestigt bzw. angeschraubt (nicht extra dargestellt) ist. Der zweite Behälter ist mit dem zweiten Anschlussbereich 2 mit Hilfe der in den Figuren 3, 5, 6, 7 und 12 gut erkennbaren selbst vorzugsweise am zweiten Behälter mit Hilfe der Schelle 11 (siehe Figur 12) befestigten und handbetätigbaren Spanneinrichtung 5 verbunden. Diese Verbindung ist leicht lösbar, d.h. der Behälter kann einerseits vor dem Umfüllen leicht mit dem zweiten Anschlussbereich 2 verbunden, andererseits aber auch nach dem Umfüllen leicht wieder gelöst werden.

Die genannten beiden Behälter sind nur in Figur 1 und 12 dargestellt und in den übrigen Figuren der Einfachheit halber im wesentlichen weggelassen. Lediglich der anschlussseitige Bereich des zweiten, kleineren Behälters (also seine Ausgussöffnung), der - vergleiche Figur 1 - bei geschlossenem Behälter auch mit einem Deckel versehen ist und an dem auch die Spanneinrichtung 5 angeordnet ist, ist stets dargestellt.

Wie sich weiterhin insbesondere aus Figur 1 ergibt, ermöglicht die Drehbarkeit der Gehäuseteile 3.1, 3.2 zueinander, dass der zweite Behälter, der typischer Weise einige Kilogramm schwer und damit nicht so leicht handhabbar ist, mit seinem Deckel nach oben in die Umfüllvorrichtung eingesetzt bzw. eingebracht und dort mit dieser verbunden werden kann. Während der erste Behälter typischer Weise ohnehin mit seinem Verschluss (sofern er einen hat) nach oben weisend aufgestellt ist, wird somit der zweite Behälter - im Unterschied zum vorgenannten Stand der Technik - erst auf den Kopf gestellt, wenn er mit der Vorrichtung verbunden ist und mit deren Hilfe (und somit leichter als nur von Hand) umgedreht werden kann. Hierbei ist ferner besonders bevorzugt am zweiten Anschlussbereich 2 eine Aufnahme 10 vorgesehen (siehe hierzu Figur 3), in die der zweite Behälter mit seiner Spanneinrichtung 5 zunächst einhäng- und anschließend in Spannposition schwenkbar ist.

In Figur 1 ist weiterhin die Betätigungseinrichtung 4, die weiter unten nochmals genauer erläutert wird, nicht mit diesem Deckel gekoppelt, was man daran erkennen kann, dass das am freien Ende eines Betätigungselements 4.3 der Betätigungseinrichtung 4 angeordnete erste Teil eines Bajonettverschlusses (siehe hierzu Figur 11) die Hinterschneidung, die den zweiten Teil des Bajonettverschlusses bildet (siehe hierzu Figur 9 und 10), am Deckel nicht hintergreift. Dieses Betätigungselement 4.3 durchgreift aber die Öffnung 3.3 am zweiten Gehäuseteil 3.2, die über ein kurzes Rohrstück (nachfolgend auch viertes Zylinderelement 3.8 genannt) direkt mit dem zweiten Anschlussbereich 2 verbunden ist.

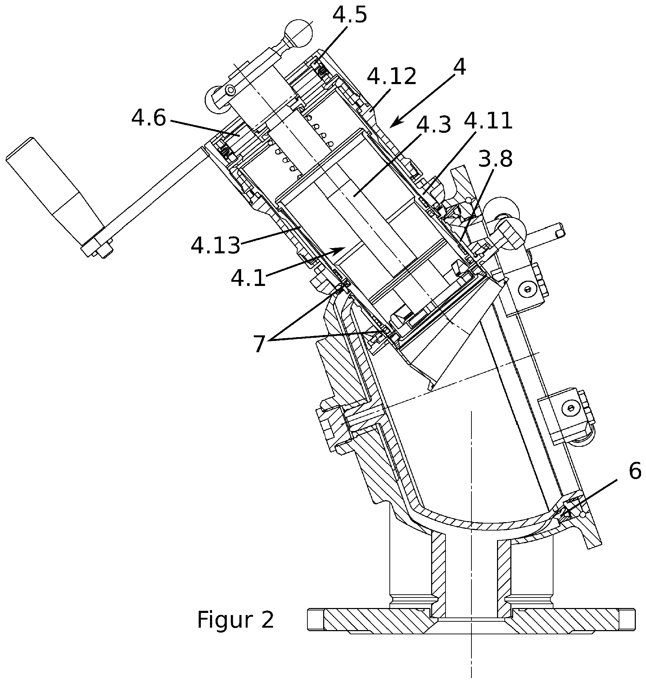

In Figur 2 ist nun die Situation dargestellt, bei der der erste Teil des genannten Bajonettverschlusses mit Hilfe einer entsprechend geeigneten, an der Betätigungseinrichtung 4 vorgesehenen Mechanik in Eingriff mit der Hinterschneidung am Deckel, also mit dem zweiten Teil des Bajonettverschlusses, gebracht ist, d. h. die Betätigungseinrichtung 4 und der Deckel sind nunmehr miteinander gekoppelt (vergleiche hierzu auch die Figuren 9 bis 11). Figur 3 zeigt diese Position nochmals in Vorderansicht.

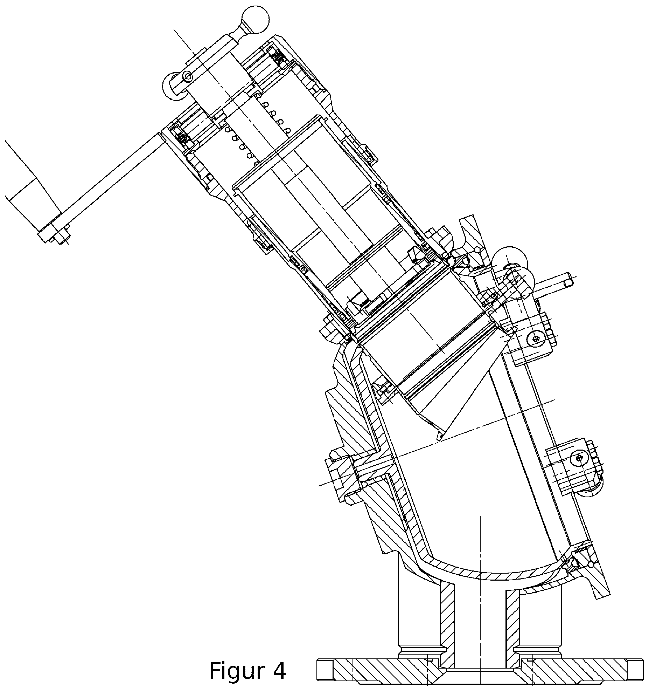

In Figur 4 ist der nächste Schritt dargestellt, nämlich die Situation, bei der der Deckel mit Hilfe der Betätigungseinrichtung 4 aus dem Behälter herausgezogen und am zweiten Anschlussbereich 2 vorbei bis jenseits der Öffnung 3.3 gezogen worden ist. Dieser Vorgang, bei dem sich die Betätigungseinrichtung 4 teleskopartig verlängert, ist, wie ersichtlich, mit dem Herausziehen eines Korkens aus einer Flasche vergleichbar, wobei bei der erfindungsgemäßen Umfüllvorrichtung der Deckel aber stets innerhalb des Umfüllgehäuses 3 bleibt. Genauer betrachtet, befindet sich der Deckel in dieser Situation in dem Aufnahmebereich 4.1 innerhalb der Betätigungseinrichtung 4, und zwar derart, dass er keinen Kontakt mehr mit dem zweiten Gehäuseteil 3.2 hat.

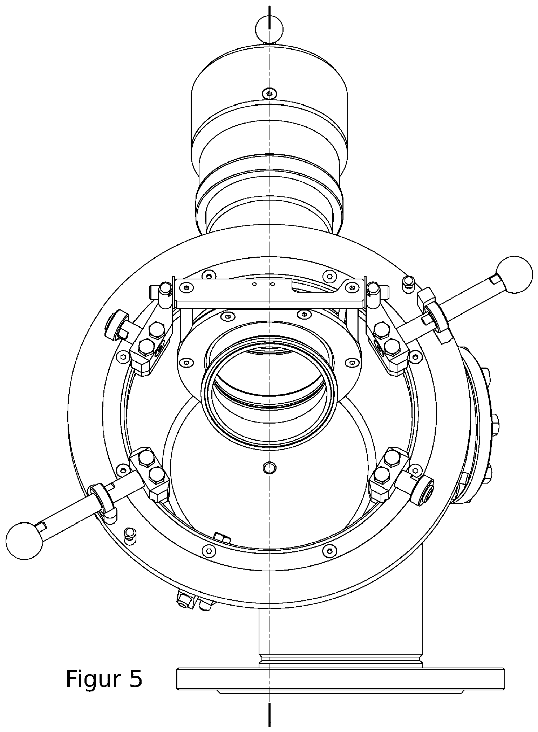

Dies wiederum hat zur Folge, dass das zweite Gehäuseteil 3.2 nunmehr im nächsten Schritt vorzugsweise mit Hilfe der Handgriffe 3.5 um die gemeinsame Drehachse 3.4 verdreht werden kann, und zwar mit Blick auf Figur 5 und orientiert an den beiden Anschlägen 3.6 im Uhrzeigersinn.

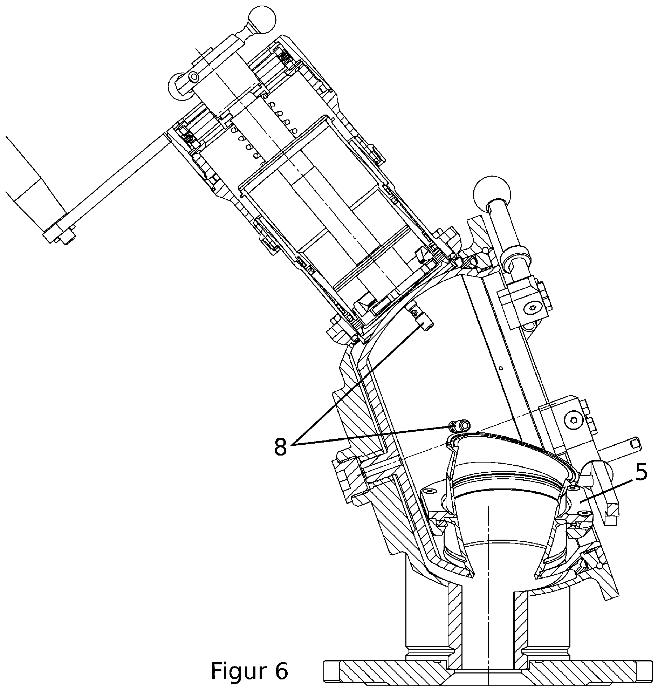

Die Figuren 6 und 7 zeigen die Situation nach Abschluss der genannten Drehung, bei der nun der zweite Anschlussbereich 2 dem ersten Anschlussbereich 1 zugewandt ausgebildet ist, so dass ein im am zweiten Anschlussbereich 2 befestigten Behälter befindliches Medium ohne weiteres in den am ersten Anschlussbereich 1 befestigen Behälter fließen kann.

Wie aus den Figuren ersichtlich, hat bei diesem gesamten Umfüllvorgang die Außenwelt keinen Kontakt mit dem Inneren der Behälter, was auch mit den genannten Dichtungen (auf die unten noch weiter eingegangen wird) und der speziellen Positionierung der beiden Gehäuseteile 3.1, 3.2 zu tun hat.

Der besondere Vorteil der erfindungsgemäße Umfüllvorrichtung wird dann besonders deutlich, wenn man die nun noch folgenden Schritte betrachtet:
Ist das Medium aus dem einen (zweiten) Behälter vollständig in den anderen (ersten) Behälter umgefüllt, wird der zweite Gehäuseteil 3.2 wieder zurück in die obere Position gemäß der Figuren 1 bis 5 gedreht. Dann wird mit Hilfe der Betätigungseinrichtung 4 der Deckel aus dem Aufnahmebereich 4.1 durch die Öffnung 3.3 und den zweiten Anschlussbereich 2 hindurch zurück in die Ausgussöffnung des (zweiten) Behälters, an der auch die Spanneinrichtung 5 befestigt ist, gebracht. Da dabei die Außenseite des Deckels, also die Seite, an der der erste Teil des genannten Bajonettverschlusses eingegriffen hat, zu keinem Zeitpunkt in Kontakt mit dem Medium gekommen ist, besteht auch keine Gefahr, dass die Außenwelt beim Lösen der Spanneinrichtung 5 mit dem Medium in Kontakt kommt, wobei darüber hinaus grundsätzlich auch auf jegliche Spülung oder dergleichen der Umfüllvorrichtung verzichtet werden kann.

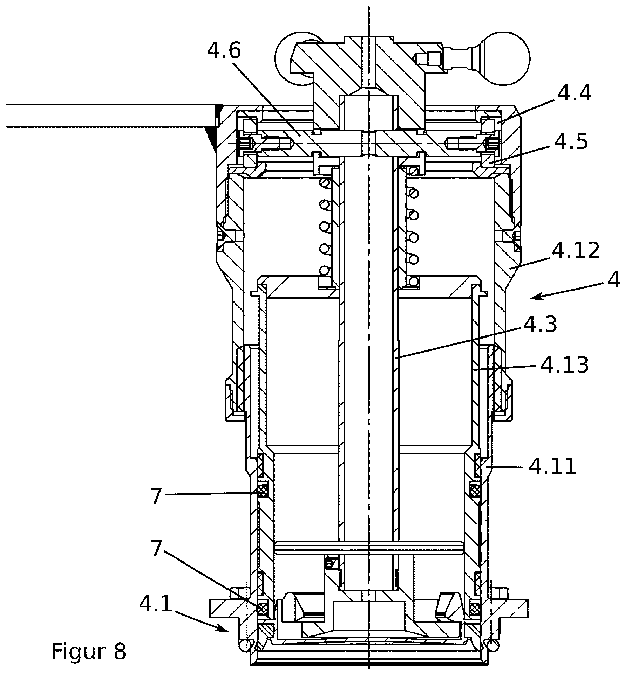

Die in den Figuren dargestellte, vorstehend nur ansatzweise erläuterte Betätigungseinrichtung 4 wird nun nachfolgend im Einzelnen beschrieben:
Wie insbesondere aus den Figuren 1 und 8 ersichtlich, ist besonders bevorzugt vorgesehen, dass die Betätigungseinrichtung 4 zur Realisierung der oben erwähnten Teleskopfunktion ein erstes, mit dem ersten Gehäuseteil 3.1 fest verbundenes Zylinderelement 4.11, vorzugsweise (es sind auch andere Konstruktionen zum Verschieben des Deckels denkbar) ein zweites, auf das erste Zylinderelement 4.11 aufgeschraubtes Zylinderelement 4.12 und ein drittes, abgedichtet verschieblich im ersten Zylinderelement 4.11 gelagertes Zylinderelement 4.13 umfasst. Um dabei mit wenigen Umdrehungen eine große Verstellwirkung erzielen zu können, ist das (in Figur 8 eingezeichnete) Gewinde zwischen dem ersten und zweiten Zylinderelement 4.11, 4.12 mehrgängig ausgebildet.

Weiterhin ist, wie bereits erwähnt, besonders bevorzugt vorgesehen, dass ein viertes Zylinderelement 3.8 am zweiten Gehäuseteil 3.2 angeordnet ist. Dabei ist, wie ebenfalls bereits erwähnt, der zweite Anschlussbereich 2 (abgesehen von einem entsprechenden Anschlussflansch) letztlich aus diesem vierten Zylinderelement 3.8 gebildet.

Eine zusätzliche, besonders bevorzugte Weiterbildung besteht ferner darin, dass das dritte Zylinderelement 4.13, das gewissermaßen zusammen mit dem Deckel den oben genannten Korken bildet, im vierten Zylinderelement 3.8 abgedichtet verschieblich gelagert ausgebildet ist.

Wie insbesondere aus den Figuren 1, 2 und 4 ersichtlich, ist weiterhin bevorzugt vorgesehen, dass das erste und das vierte Zylinderelement 4.11, 3.8 zur Führung des dritten Zylinderelements 4.13 einen gleichen Innendurchmesser aufweisen und beim Öffnen und Schließen des zweiten Behälters zueinander fluchtend angeordnet sind.

Um den Deckel vom zweiten Behälter lösen zu können, ist ferner, wie erwähnt, bevorzugt vorgesehen, dass die Betätigungseinrichtung 4 ein Betätigungselement 4.3 umfasst (siehe hierzu insbesondere Figur 8 und 11). Dieses Betätigungselement 4.3 ist dabei zwar drehbar, aber - abgesehen von einem geringen federbelasteten Axialspiel - axialfixiert mit dem zweiten Zylinderelement 4.12 verbunden ausgebildet. Zu dieser Axialfixierung des Betätigungselements 4.3 ist dabei besonders bevorzugt am zweiten Zylinderelement 4.12 eine kreisförmige Führungsnut 4.4 für zwei Führungsrädchen 4.5 vorgesehen, die an Enden einer senkrecht durch das Betätigungselement 4.3 verlaufenden Achse 4.6 angeordnet sind.

Darüber hinaus ist bevorzugt vorgesehen, dass das Betätigungselement 4.3 einerseits drehbar zum dritten Zylinderelement 4.13 ausgebildet ist. Andererseits ist das Betätigungselement 4.3 mit einem Abschlussdeckel für das dritte Zylinderelement 4.13 verbunden, d.h. der Abschlussdeckel bildet einen Anschlag am dritten Zylinderelement 4.13, so dass das Betätigungselement 4.3 somit axialbegrenzt verschieblich zum dritten Zylinderlement 4.13 gelagert ausgebildet ist. Dabei ist weiterhin das dritte Zylinderelement 4.13 bevorzugt als Widerlager für den Deckel des zweiten Behälters und das Betätigungselement 4.3 zum Festspannen des Deckels gegen das dritte Zylinderelement 4.13 ausgebildet.

Weiterhin ist - wie insbesondere aus Figur 1, 2 und 8 ersichtlich - besonders bevorzugt vorgesehen, dass am Außenumfang des dritten Zylinderelements 4.13 bei Öffnen und Schließen des zweiten Behälters einerseits mit dem ersten Zylinderelement 4.11 und andererseits mit dem vierten Zylinderelement 3.8 zusammenwirkende Abdichtungselemente 7 (bevorzugt O-Ringe) angeordnet sind.

Wie aus Figur 6 und 7 zu erkennen (in den übrigen Figuren der Einfachheit halber nicht extra dargestellt), ist weiterhin bevorzugt vorgesehen, dass am ersten und/oder zweiten Gehäuseteil 3.1, 3.2 Reinigungsdüsen 8 zum Ausspülen eines Zwischenraums zwischen den beiden Gehäuseteilen 3.1, 3.2 angeordnet sind.

In diesem Kontext ist darüber hinaus besonders bevorzugt am ersten Gehäuseteil 3.1 ein einen Einblick in einen Zwischenraum zwischen dem ersten und zweiten Gehäuseteil 3.1, 3.2 gewährendes Schauglas 9 vorgesehen. Dabei ist darüber hinaus bevorzugt vorgesehen, dass das Schauglas 9 außerdem beim Drehen des zweiten Gehäuseteils 3.2 einen Einblick in den zweiten Behälter gewährend zwischen der Betätigungseinrichtung 4 und dem ersten Anschlussbereich 1 angeordnet ist.

Die voranstehend im Detail beschriebene und in den Figuren dargestellte Betätigungseinrichtung 4 funktioniert schließlich wie folgt:
Ausgangspunkt der Betrachtung ist wiederum Figur 1. In dieser Position ist der noch mit einem Deckel verschlossene, zweite Behälter mit Hilfe der Spanneinrichtung 5 mit dem zweiten Anschlussbereich 2 verbunden.

Dank entsprechend beidseitig überstehender Stifte (siehe hierzu auch Figur 12) an der Spanneinrichtung 5 ist es dabei möglich gewesen, den zweiten Behälter zunächst in die Aufnahmen 10 (siehe hierzu insbesondere Figur 3) einzuhängen und dann in Spannposition zu schwenken, und dies alles bei nach oben weisendem, geschlossenen Deckel, d.h. der zweite Behälter lässt sich, wie erwähnt, auf sehr einfache Weise von nur einer einzigen Person an der erfindungsgemäße Umfüllvorrichtung befestigen.

In Figur 1 sind das Betätigungselement 4.3 und der Deckel des zweiten Behälters noch nicht miteinander verbunden. Dies wird durch Drehen des Betätigungselements 4.3 erreicht, und zwar dadurch, dass dieses bajonettartig mit dem Deckel zusammenwirkt. Aufgrund der vorerwähnten Federbelastung ergibt sich dabei außerdem eine gewisse Vorspannung, die dafür sorgt, dass sich die beiden Teile (also Deckel und Betätigungselement) nach ihrer Verkoppelung nicht so leicht von einander lösen können. Diese Position ist in Figur 2 dargestellt.

Wird nun als nächstes die Handkurbel 4.2 in Öffnungsrichtung gedreht, so werden das erste und das zweite Zylinderelement 4.11 und 4.12 auseinander bewegt. Da dabei das Betätigungselement 4.3 axialfixiert am zweiten Zylinderelement 4.12 befestigt ist, wird gleichzeitig das dritte Zylinderelement 4.13, gegen das der Deckel des zweiten Behälters mit Hilfe des Betätigungselements 4.3 gezogen ist, innerhalb des ersten und vierten Zylinderelements 4.11 und 3.8 nach oben gezogen. Dank der an mindestens zwei Axialpositionen vorgesehenen Abdichtungselemente 7 in Form von O-Ringen ist dabei jederzeit gewährleistet, dass insbesondere kein Medium vom ersten Behälter in die Umgebung gelangen kann.

Wird nun weiter an der Handkurbel 4.2 in Öffnungsrichtung gedreht, gelangt die Vorrichtung in die in Figur 4 dargestellte Position, bei der der am Rand mit einer entsprechenden Ringdichtung versehene Deckel (siehe hierzu insbesondere Figur 10) des zweiten Behälters nicht mehr den Behälter verschließt, sondern sich vollständig innerhalb des ersten Zylinderelements 4.11 befindet, d.h. der Innenraum des zweiten Behälters ist nun mit dem Zwischenraum zwischen den beiden Gehäuseteilen 3.1 und 3.2 verbunden. Gleichzeitig ist der Innenraum der Betätigungseinrichtung 4 durch den Deckel des zweiten Behälters verschlossen, so dass dort (nach wie vor - vorher war der Verschluss durch das dritte Zylinderelement 4.13 gewährleistet) kein Medium eindringen kann.

Ist die Position gemäß Figur 4 erreicht, kann der zweite Behälter gemeinsam mit dem zweiten Gehäuseteil 3.2 um die Achse 3.4 gedreht werden, so dass das Medium in den ersten Behälter gelangen kann. Diese Position ist dann in Figur 6 dargestellt.

Ist der Umfüllvorgang abgeschlossen, werden die vorgenannten Schritte in umgekehrter Reihenfolge ausgeführt, d.h. zunächst wird der zweite Behälter wieder zurück gedreht, so dass seine Öffnung wieder oben ist. Dann wird mit der Handkurbel 4.2 über das Betätigungselement 4.3 der Deckel vom dritten Zylinderelement 4.13 ausgehend durch das vierte Zylinderelement 3.8 auf die Öffnung des zweiten Behälters geschoben, um diesen zu verschließen. Ist dies geschehen, wird das bajonettartig mit dem Deckel zusammenwirkende Betätigungselement 4.3 von diesem gelöst und die Spanneinrichtung 5 gelockert, so dass dann der zweite Behälter wieder aus der Umfüllvorrichtung entnommen werden kann.

### Bezugszeichenliste

- 1: erster Anschlussbereich
- 2: zweiter Anschlussbereich
- 3: Umfüllgehäuse
- 3.1: erster Gehäuseteil
- 3.2: zweiter Gehäuseteil
- 3.3: Öffnung
- 3.4: Drehachse
- 3.5: Handgriff
- 3.6: Anschlag
- 3.7: Rampe
- 3.8: viertes Zylinderelement
- 4: Betätigungseinrichtung
- 4.1: Aufnahmebereich
- 4.2: Handkurbel
- 4.3: Betätigungselement
- 4.4: Führungsnut
- 4.5: Führungsrädchen
- 4.6: Achse
- 4.11: erstes Zylinderelement
- 4.12: zweites Zylinderelement
- 4.13: drittes Zylinderelement
- 5: Spanneinrichtung
- 6: Dichtung
- 7: Abdichtungselement
- 8: Reinigungsdüse
- 9: Schauglas
- 10: Aufnahme
- 11: Schelle

## Patentansprüche

1. Umfüllvorrichtung, umfassend einen ersten Anschlussbereich (1) für einen ersten Behälter und einen zweiten Anschlussbereich (2) für einen zweiten Behälter, die während einer Umfüllphase eines Mediums von einem in den anderen Behälter miteinander verbunden ausgebildet sind, wobei der erste Anschlussbereich (1) an einem ersten Gehäuseteil (3.1) und der zweite Anschlussbereich (2) an einem zweiten Gehäuseteil (3.2) angeordnet und die beiden Gehäuseteile (3.1, 3.2) beweglich zueinander ausgebildet sind, wobei der erste Gehäuseteil (3.1) und der zweite Gehäuseteil (3.2) gemeinsam ein auch vor und nach der Umfüllphase nach außen abgedichtetes Umfüllgehäuse (3) bilden,
wobei die Gehäuseteile (3.1, 3.2) verdrehbar zueinander und über eine Drehachse (3.4) miteinander verbunden ausgebildet sind , wobei das zweite Gehäuseteil (3.2) um die gemeinsame Drehachse (3.4) verdreht werden kann,
**dadurch gekennzeichnet, dass** nach Abschluss der Drehung ein im am zweiten Anschlussbereich (2) befestigten Behälter befindliches Medium ohne weiteres in dem am erste Anschlussbereich (1) befestigten Behälter fließen kann.

2. Umfüllvorrichtung nach Anspruch 1,
**dadurch gekennzeichnet,**
**dass** der erste Anschlussbereich (1) auf einer zum zweiten Gehäuseteil (3.2) abgewandten Seite des ersten Gehäuseteils (3.1) und der zweite Anschlussbereich (2) auf einer zum ersten Gehäuseteil (3.1) abgewandten Seite des zweiten Gehäuseteils (3.2) angeordnet ist.

3. Umfüllvorrichtung nach Anspruch 1 oder 2,
**dadurch gekennzeichnet,**
**dass** die Gehäuseteile (3.1, 3.2) topfartig ausgebildet sind.

4. Umfüllvorrichtung nach einem der Ansprüche 1 bis 3,
**dadurch gekennzeichnet,**
**dass** der erste Anschlussbereich (1) an einem unteren Bereich des Umfüllgehäuses (3) angeordnet und der zweite Anschlussbereich (2) zwischen einer oberen und einer unteren Stellung verstellbar ausgebildet ist.

5. Umfüllvorrichtung nach einem der Ansprüche 1 bis 4,
**dadurch gekennzeichnet,**
**dass** am Umfüllgehäuse (3) eine Betätigungseinrichtung (4) zum Öffnen und Verschließen eines der beiden Behälter angeordnet ist.

6. Umfüllvorrichtung nach Anspruch 5,
**dadurch gekennzeichnet,**
**dass** die Betätigungseinrichtung (4) einerseits auf einer zum zweiten Gehäuseteil (3.2) abgewandten Seite des ersten Gehäuseteils (3.1) angeordnet und andererseits beim Öffnen und Schließen eines der beiden Behälter durch eine am zweiten Gehäuseteil (3.2) vorgesehene Öffnung (3.3) hindurchgreifend ausgebildet ist.

7. Umfüllvorrichtung nach Anspruch 5 oder 6,
**dadurch gekennzeichnet,**
**dass** die Betätigungseinrichtung (4) in ihrem Innern einen nach außen abgedichteten Aufnahmebereich (4.1) für einen Deckel eines der beiden Behälter aufweist.

8. Umfüllvorrichtung nach einem der Ansprüche 5 bis 7,
**dadurch gekennzeichnet,**
**dass** die Betätigungseinrichtung (4) zwischen einer ersten Stellung, bei der ein Deckel eines der beiden Behälter an diesem Behälter positioniert ist, und einer zweiten Stellung, bei der der Deckel auf einer dem zweiten Anschlussbereich (2) abgewandten Seite des zweiten Gehäuseteils (3.2) positioniert ist, verstellbar ausgebildet ist.

9. Umfüllvorrichtung nach einem der Ansprüche 5 bis 8,
**dadurch gekennzeichnet,**
**dass** die Betätigungseinrichtung (4) ein erstes, mit dem ersten Gehäuseteil (3.1) fest verbundenes Zylinderelement (4.11), vorzugsweise ein zweites, auf das erste Zylinderelement (4.11) aufgeschraubtes Zylinderelement (4.12) und ein drittes, abgedichtet verschieblich im ersten Zylinderelement (4.11) gelagertes Zylinderelement (4.13) umfasst.

## Claims

1. A transfer device, comprising a first connection region (1) for a first container and a second connection region (2) for a second container, said regions being designed to be connected to one another during a phase of transferring a medium from one container into the other container, wherein the first connection region (1) is arranged on a first housing part (3.1), and the second connection region (2) is arranged on a second housing part (3.2), and the two housing parts (3.1, 3.2) are designed to be movable relative to one another, wherein the first housing part (3.1) and the second housing part (3.2) together form a transfer housing (3) which is sealed from the outside even before and after the transfer phase, wherein the housing parts (3.1, 3.2) are designed to be rotatable relative to one another and connected to one another via a rotational axis (3.4), wherein the second housing part (3.2) can be rotated about the common rotational axis (3.4),
**characterised in that**
after rotation is complete, a medium situated in the container fastened to the second connection region (2) can easily flow in the container fastened to the first connection region (1).

2. The transfer device according to claim 1,
**characterised in that**
the first connection region (2) is arranged on a side of the first housing part (3.1) facing away from the second housing part (3.2), and the second connection region (2) is arranged on a side of the second housing part (3.2) facing away from the first housing part (3.1).

3. The transfer device according to claim 1 or 2,
**characterised in that**
the housing parts (3.1, 3.2) are pot-shaped.

4. The transfer device according to any one of claims 1 to 3,
**characterised in that**
the first connection region (1) is arranged on a lower region of the transfer housing (3), and the second connection region (2) is movable between an upper and a lower position.

5. The transfer device according to any one of claims 1 to 4,
**characterised in that**
an actuating apparatus (4) for opening and closing one of the two containers is arranged on the transfer housing (3).

6. The transfer device according to claim 5,
**characterised in that**
the actuating apparatus (4) on the one hand is arranged on a side of the first housing part (3.1) facing away from the second housing part (3.2) and on the other hand is designed to pass through an opening (3.3) provided on the second housing part (3.2) when one of the two containers is opened and closed.

7. The transfer device according to claim 5 or 6,
**characterised in that**
the actuating apparatus (4) has in its interior a receiving region (4.1), which is sealed from the outside, for a lid of one of the two containers.

8. The transfer device according to any one of claims 5 to 7,
**characterised in that**
the actuating apparatus (4) is movable between a first position, in which a lid of one of the two containers is positioned on said container, and a second position, in which the lid is positioned on a side of the second housing part (3.2) facing away from the second connection region (2).

9. The transfer device according to any one of claims 5 to 8,
**characterised in that**
the actuating apparatus (4) comprises a first cylinder element (4.11), which is fixedly connected to the first housing part (3.1), preferably a second cylinder element (4.12), which is screwed onto the first cylinder element (4.11), and a third cylinder element (4.13), which is mounted in a sealed, displaceable manner in the first cylinder element (4.11).

## Revendications

1. Dispositif de transvasement, comprenant une première zone de raccordement (1) pour un premier réservoir et une deuxième zone de raccordement (2) pour un deuxième réservoir, qui pendant une phase de transvasement d'un fluide de l'un dans l'autre réservoir sont conçues en étant assemblées l'une avec l'autre, la première zone de raccordement (1) étant placée sur une première partie (3.1) de carter et la deuxième zone de raccordement (2) étant placée sur une deuxième partie (3.2) de carter et les deux parties (3.1, 3.2) de carter étant conçues en étant déplaçables l'une par rapport à l'autre, la première partie (3.1) de carter et la deuxième partie (3.2) de carter constituant conjointement un carter (3) de transvasement étanchéifié vers l'extérieur, également avant et après la phase de transvasement,
les parties (3.1, 3.2) de carter étant conçues en étant rotatives l'une par rapport à l'autre et en étant assemblées l'une avec l'autre par l'intermédiaire d'un axe de rotation (3.4), la deuxième partie (3.2) de carter pouvant être tournée autour de l'axe de rotation (3.4),
**caractérisé**
**en ce qu'**après l'achèvement de la rotation, du fluide se trouvant dans le réservoir fixé sur la deuxième zone de raccordement (2) peut s'écouler facilement dans le réservoir fixé sur la première zone de raccordement (1).

2. Dispositif de transvasement selon la revendication 1,
**caractérisé**
**en ce que** la première zone de raccordement (2) est placée sur une face de la première partie (3.1) de carter qui est détournée de la deuxième partie (3.2) de carter et **en ce que** la deuxième zone de raccordement (2) est placée sur une face de la deuxième partie (3.2) de carter qui est détournée de la première partie (3.1) de carter.

3. Dispositif de transvasement selon la revendication 1 ou 2,
**caractérisé**
**en ce que** les parties (3.1, 3.2) de carter sont conçus en forme de creuset.

4. Dispositif de transvasement selon l'une quelconque des revendications 1 à 3,
**caractérisé**
**en ce que** la première zone de raccordement (1) est placée sur une zone inférieure du carter (3) de transvasement et **en ce que** la deuxième zone de raccordement (2) est conçue en étant ajustable entre une position supérieure et une position inférieure.

5. Dispositif de transvasement selon l'une quelconque des revendications 1 à 4,
**caractérisé**
**en ce que** sur le carter (3) de transvasement est placé un système d'actionnement (4), destiné à ouvrir et à fermer l'un des deux réservoirs.

6. Dispositif de transvasement selon la revendication 5,
**caractérisé**
**en ce que** le système d'actionnement (4) est placé d'une part sur une face de la première partie (3.1) de carter qui est détournée de la deuxième partie (3.2) de carter et d'autre part, lors de l'ouverture et de la fermeture de l'un des deux réservoirs, est conçu en traversant un orifice (3.3) prévu sur la deuxième partie (3.2) de carter.

7. Dispositif de transvasement selon la revendication 5 ou 6,
**caractérisé**
**en ce que** le système d'actionnement (4) comporte dans son intérieur une zone de logement (4.1) étanchéifiée vers l'extérieur pour un couvercle de l'un des deux réservoirs.

8. Dispositif de transvasement selon l'une quelconque des revendications 5 à 7,
**caractérisé**
**en ce que** le système d'actionnement (4) est conçu en étant ajustable entre une première position, dans laquelle un couvercle de l'un des deux réservoirs est positionné sur ledit réservoir et une deuxième position, dans laquelle le couvercle est positionné sur une face de la deuxième partie (3.2) de réservoir qui est détournée de la deuxième zone de raccordement (2).

9. Dispositif de transvasement selon l'une quelconque des revendications 5 à 8,
**caractérisé**
**en ce que** le système d'actionnement (4) comprend un premier élément de cylindre (4.11) fixement assemblé avec la première partie (3.1) de carter, de préférence un deuxième élément de cylindre (4.12), vissé sur le premier élément de cylindre (4.11) et un troisième élément de cylindre (4.13) logé en étant déplaçable en étant étanchéifié dans le premier élément de cylindre (4.11).
